# EUROPEAN PATENT SPECIFICATION

(11) **EP 0 479 940 B1**
(45) Date of publication and mention of the grant of the patent: **20.10.1993**
(21) Application number: 90917840.2
(22) Date of filing: 05.06.1990
(51) Int. Cl.: F16K 1/22

(54) **BUTTERFLY VALVE APPARATUS AND METHOD**
KLAPPENVENTILANORDNUNG UND VERFAHREN
APPAREIL ET METHODE UTILISANT UN ROBINET PAPILLON

(30) Priority: 30.06.1989 US 374897; 16.10.1989 US 422210
(43) Date of publication of application: 15.04.1992
(73) Proprietor: AlliedSignal Inc., Morristown, New Jersey 07962-2245 (US)
(72) Inventor: BALL, Larry, K., Chandler, AZ 85226 (US); HINES, Marshall, U., Scottsdale, AZ 85254 (US); MILLER, Terry, L., Mesa, AZ 85202 (US)
(74) Representative: Brock, Peter William
(86) International application number: US9003181
(87) International publication number: WO9100451

(56) References cited:
- FR-A- 1 178 171
- US-A- 3 147 768
- US-A- 3 971 414

## Description

The coinventors named on this application are also coinventors on other related applications generally relating to butterfly valves (including Serial Nos. 374,897, filed 30 June 1989, and 395,234, filed 17 August 1989, 422,354, filed 16 October 1989, 422,380, filed 16 October 1989, 422,487, filed 16 October 1989, 426,921, filed 24 October 1989, and 451,659, filed 15 December 1989), all cofiled or copending with the present application, and all assigned to Allied-signal Inc.

The present invention relates generally to valve apparatus and methods. More particularly, the present invention relates to butterfly valve apparatus and methods wherein a duct defines a flow path for conveying a flow of fluid. A plate-like valve member is pivotally disposed in the duct about a transverse axis, and is conformal at its outer periphery to the internal wall shape of the duct. The valve member is pivotal between a first position transverse to the flow path and substantially sealingly engaging the duct wall to close fluid flow therein, and a second position spanning the flow path generally parallel therewith to allow and control the fluid flow therein.

A conventional butterfly valve is set forth, by United States Patent No. 3,971,414, issued 27 July 1976 to H. Illing. The '414 patent also discusses the general state of the butterfly valve art prior to the invention by Illing. According to the teaching of the '414 patent, the actuating torque required to rotate the valve member of a butterfly valve from its closed position to an open position may be reduced by utilizing an articulated valve member. That is, the plate like butterfly valve member includes a leading wing and a trailing wing with respect to fluid flow. The leading wing of Illing's valve member is defined in part by a servo or spoiler tab which is carried by and pivotally movable relative to the remainder of the valve member. By pivoting the spoiler tab ahead of the valve member in the opening direction so as to point into the fluid flow Illing changes the angulation and effective moment arm of the fluid pressure and flow forces on the spoiler tab. Illing hopes to reduce the total torque opposing opening of the valve member in comparison to prevoiusly known butterfly valves. The articulation of the spoiler tab is such that it pivots from an aligned position to move ahead of the valve member during most of the pivotal movement of the latter in the opening direction. During the last portion of the pivotal movement of the valve member to its fully open position, the servo tab reverses its relative pivotal movement and returns to an aligned position achieved when the valve member is fully open. In this way, the valve member and servo tab align with one another and with the fluid flow in the fully open position of the valve member.

A reduction in the operating torque required to move the valve member from its closed to its open position, such as assertedly achieved by the invention of Illing, has been a long-recognized need in the field of butterfly valves. Unfortunately, the invention of Illing as set forth in the '414 patent does not fully comprehend the usual design requirements for a butterfly valve, and has not enjoyed commercial acceptance, to the Applicant's knowledge.

It will be understood by those skilled in the pertinent art that the valve member of a conventional butterfly valve must ordinarily achieve a sealing tight fit with the walls of the duct. Ordinarily the plate-like butterfly valve member carries a seal member at the outer periphery thereof. This seal member, for example, a piston ring type, o-ring, or lip seal, is resiliently and sealingly engageable with the duct wall in the closed position of the valve member. Thus, it is conventional for the plate-like valve member to be circumferentially continuous, and to be skewed slightly relative to the pivot shaft supporting the valve member. That is, the periphery of the valve member is disposed upstream of the shaft on one side and downstream of the shaft on the other to allow use of a circumferentially continuous sealing member at the periphery of the valve member. The pivot shaft may transect the duct perpendicularly to the flow path, or be angulated relative to the latter. The valve taught by the '414 patent does not permit use of a circumferentially continuous sealing member on the valve member periphery.

Nor does the invention in France Patent 1.178.171. The '171 patent discloses a butterfly valve having flaps which are secured to the valve member so as to be rotationally movable relative thereto. Like the '414 patent, and '171 patent uses the rotational movement of the flaps to the end of lowering torque. Though it is stated that a valve with a hydrodynamic torque of zero can be achieved at any position by the "appropriate choice of linkage" to achieve the proper relationship between the rotational angle of the valve member and the relative rotational angle of the plate, it is unclear what this statement means. That is, the statement could mean that a valve could be designed to achieve zero torque at all (cf "any") rotational angles of the valve member via rotational movement of the flap, or it could mean that, given any particular rotational angle of the valve member, a valve can be provided with linkage suitable to achieve zero torque at that particular angle via rotational movement of the flap. Irrespective of which meaning the author intended, the '717 patent discloses no structure that enables a skilled artisan to achieve zero torque at all, (or even a substantial range of), open positions of the valve member.

U.S. Patent 3,147,768 discloses an air flow control damper with a hinged valve plate. The two halves of the valve plate include means for progressively decreasing the areas thereof as the valve plate is opened. This decrease is achieved by increasing the size of a plurality of holes extending through the plate, and the related objectives are to increase air flow and reduce noise.

In view of the deficiencies of the known butterfly valve art it is an object for this invention to reduce or eliminate the opposing torque which must be overcome to move the valve member of a butterfly valve from its closed to its open position.

Desirably, fluid pressure and flow forces acting on the plate-like butterfly valve member may be used to reduce or eliminate the opposing torque, or to effect pivotal movement of the valve member.

Still further, in view of the deficiencies of the valve taught by Illing in the '414 patent, a circumferentially continuous sealing member must be possible of use on the valve member. Accordingly the present invention provides a duct defining a flow path therein, a plate-like butterfly valve member freely pivotal in said flow path about a pivot axis between a first position transverse to and closing said flow path and a second position generally parallel to said flow path to open and allow flow of fluid therein, said butterfly valve member including a pair of wing portions of substantially equal effective areas on opposite sides of said pivot axis, one of said pair of wing portions being a downstream wing with respect to pivotal movement of said butterfly valve member and flow in said flow path, and means for increasing the effective area of said downstream wing.

An advantage of the present invention is that it allows use of a circumferentially continuous sealing member on the plate-like valve member of the butterfly valve.

Another advantage of the present invention is the complete elimination of an externally mounted actuator. That is, a conventional valve actuator possibly mounted to the duct and providing torque to the plate-like valve member relative to the duct is not required with the present invention.

### BRIEF DESCRIPTION OF THE DRAWINGS

FIG. 1 provides a schematic longitudinal and partially cross-sectional view taken generally along line 1-1 of FIG. 2;
FIG. 2 is a partially cross-sectional view taken generally along line 2-2 of FIG. 1;
FIG. 2A provides an enlarged fragmentary view similar to FIG. 2, but providing a view of a dual-function actuator with parts thereof slightly shifted from their position of FIG. 2 to better illustrate structural features thereof. This actuator is also depicted on a smaller scale in FIG. 2;
FIG. 3 schematically depicts a fluid flow circuit of the invention; and
FIG. 4 provides a schematic longitudinal and partially cross-sectional view similar to FIG. 1, but with parts shown in alternative operative positions.

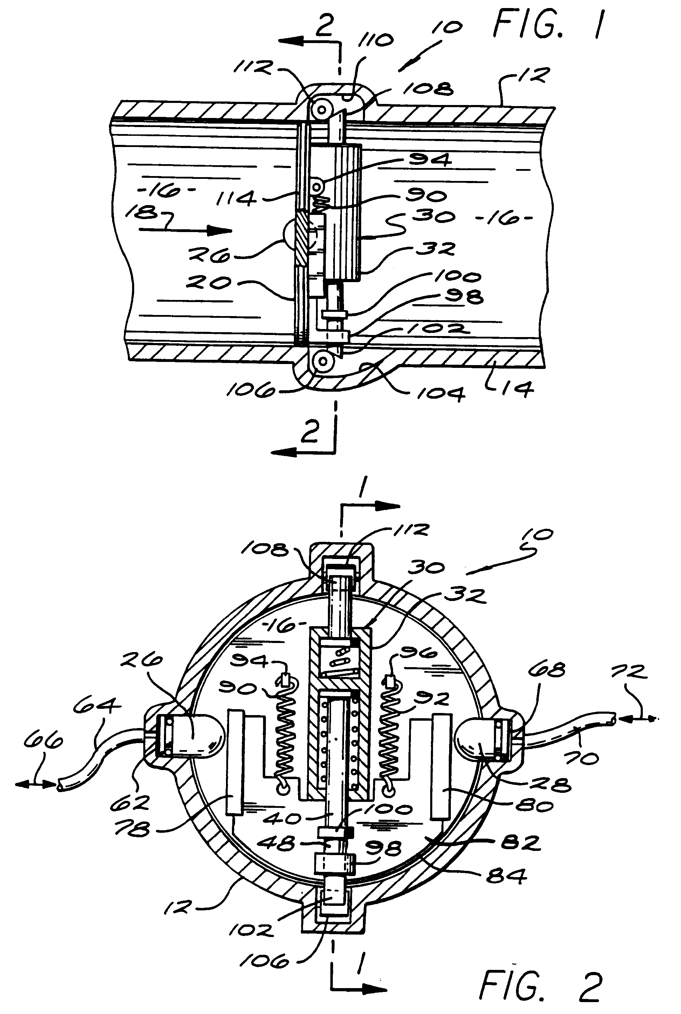

FIGS. 1 2 and 2A in conjunction schematically depict a butterfly valve or valve device 10 having a duct 12 with an elongate circumferentially extending wall 14. The wall 14 bounds a flow path 16 wherein fluid may flow, as depicted by arrow 18. In order to control the flow of fluid in flow path 16, a plate-like valve member 20 is freely pivotally disposed in the duct 12. The duct 12 defines a pair of transversely aligned inwardly opening sockets 22, 24, while the valve member 20 includes a pair of trunnions 26, 28 sealingly and freely rotatably received in the sockets 22, 24. Also carried upon the plate-like valve member 20 is a dual-function actuator, generally referenced with the numeral 30.

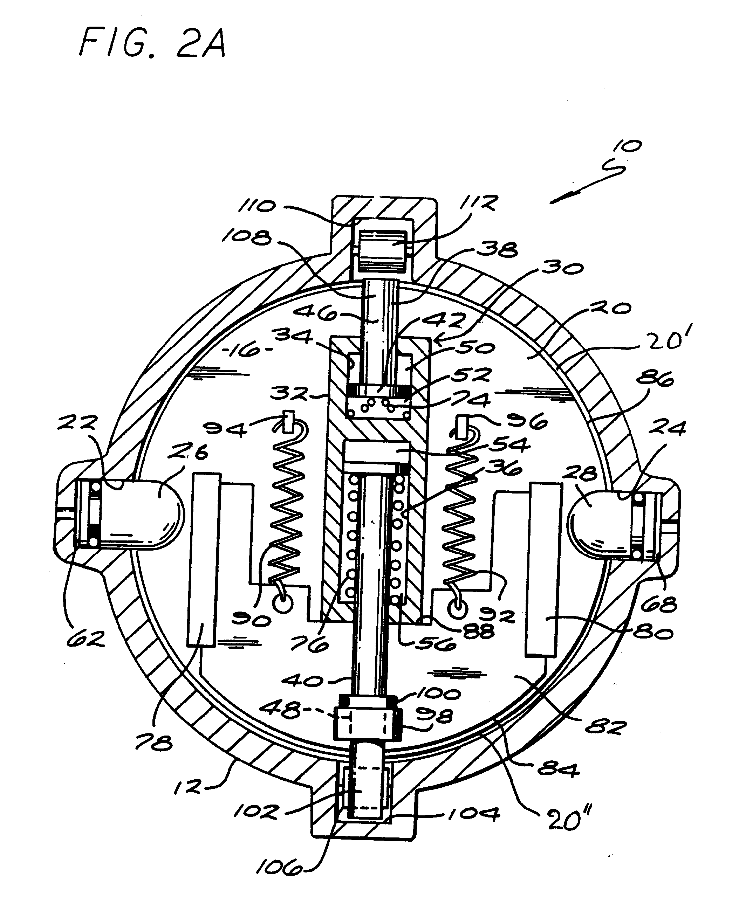

Viewing FIGS. 2 and 2A, in particular, it is seen that the actuator 30 includes a housing 32 defining therein two oppositely extending bores 34, 36 opening at opposite ends of the housing. Sealingly and reciprocably received respectively in the bores 34, 36 are respective ones of a pair of piston members 38, 40. The piston members 38, 40 each include a respective piston head portion 42, 44, and a respective piston rod portion 46, 48. The piston members 38, 40 respectively divide bores 34, 36 into pairs of chambers 50, 52, and 54, 56, which expand and contract in opposition in response to reciprocation of the respective piston member.

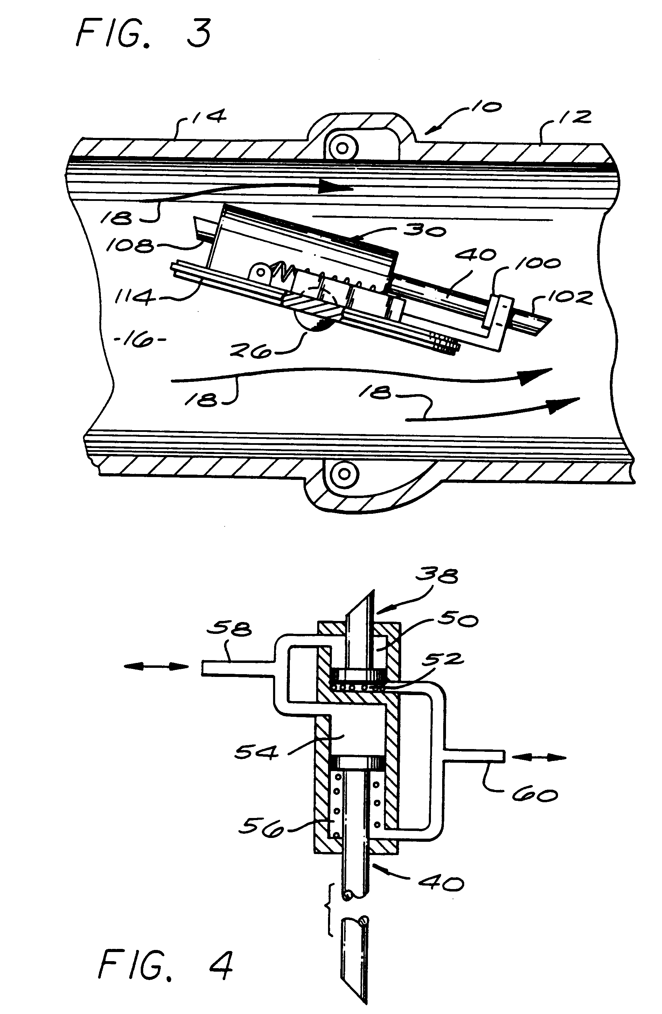

FIGS. 2, 2A and 4 in conjunction show schematically a pair of bifurcated fluid flow passages 58, 60 defined by the valve member 20 and housing 32. Fluid flow passage 58 communicates chambers 50 and 54 of actuator 30 with a chamber 62 defined within socket 22, and from there to a conduit 64 for receipt and relief of pressure fluid, as depicted by arrow 66. Similarly, passage 60 communicates chambers 52 and 56 with a chamber 68 defined within socket 24, and to a conduit 70 for receipt and relief of pressure fluid, as represented by arrow 72. Returning to consideration of FIGS. 2 and 2A, it will be seen that a coil spring 74 is disposed in chamber 52 to urge the piston member 38 to a first or extended position. Also, disposed within chamber 56 is a coil spring 76 urging piston member 40 to a first or retracted position.

FIGS. 2 and 2A shows that the plate-like valve member 20 carries a pair of spaced apart guide members 78, 80. Slidably received in the embrace of guide members 78, 80, in sliding juxtaposition with a face of the valve member 20, is a plate-like partially arcuate flap member 82. The flap member 82 defines an arcuate edge 84 which in a first position of the flap member is disposed slightly inwardly of an outer peripheral surface 86 of the valve member 20. In the first position of the flap member 82, an abutment surface 88 thereof engages the housing 32 of actuator 30. A pair of coil tension springs 90, 92 at one end engage the flap member 82 and extend to respective lugs 94, 96 carried by valve member 20. The springs 90 92 urge the flap member 82 to its first position, as depicted in FIGS. 2 and 2A, wherein the surface 88 abuts housing 32.

Also carried by the flap member 82 is an apertured boss 98 through which extends the rod portion 48 of piston member 40. Spaced from the boss 98, the piston rod 48 carries an abutment ring 100. Outwardly of the boss 98, the rod portion 48 includes a cam-surface or wedge-surface termination portion 102. The portion 102 of rod 48 is received in an axially extending recess 104 defined on the wall 14 of duct 12. Within the recess 104, a roller member 106 is rotationally disposed for engagement by the termination portion 102 of rod 48, viewing FIGS. 1 and 2 in particular.

Similarly to the piston rod 48, the piston rod 46 includes a cam-surface or wedge-surface termination portion 108 which is disposed in a recess 110 on the wall 14 of duct 12. The wedge-surface portion 108 is disposed oppositely to portion 102, and is engageable with a roller striker member 112 rotatably disposed in the recess 110. It will be noted that each of the recesses 104, 110 is disposed downstream of the valve member 20 when the latter is in its first or closed position, as depicted in FIG. 1. Consequently, a sealing member 114 carried on valve member 20 at the outer peripheral surface 86 thereof may engage a circumferentially continuous portion of the wall 14 upstream of the recesses 104, 110.

Those skilled in the butterfly valve art will recognize that the plate-like valve member 20 may be skewed with respect to the pivot axis defined by the trunnious 26, 28. In other words the valve member may be disposed upstream of one trunnion and downstream of the other trunnion to allow peripheral surface 86, and perhaps also the sealing member 114, to be circumferentially continuous. However, this feature is omitted from the schematic depictions of the drawing Figures for ease of illustration. The sealing member 114 may be a piston ring type, an o-ring, or a lip-seal type, for. example. Regardless of the type of sealing member employed, the sealing member frictionally engages the wall 14 to effect a fluid seal therwith. As a result, an additional increment of torque is required to pivot the valve member 20 in its final movement to its closed position, and in its initial movement from the closed position toward opening of the flow path 16.

In operation of the butterfly valve 10, pressurized fluid 18 in the flow path 16 applies static fluid pressure forces to the wings 20', 20'' of the valve member 20. The wings 20', 20'' are of equal areas, and disposed on opposite sides of the pivot axis defined by trunnious 26, 28. Because these static fluid pressure forces are applied to equal areas on each side of the pivot axis of valve member 20, the latter is stable in its closed position depicted in FIG. 1.

In order to pivot the valve member 20 toward an open position thereof, pressurized fluid is provided to chambers 50 and 54 via passage 58, chamber 62, and conduit 64, as depicted by arrow 66, viewing FIGS 2, 2A, and 3. The spring rate and preload of the springs 74 and 76 are selected so that the piston member 38 retracts fully to its position illustrated in FIGS. 3 and 4 before piston member 40 begins to extend. Consequently, the rod end portion 108 is first retracted to disengage from roller member 112. Subsequently, the piston member 40 begins to extend in opposition to spring 76. This extension of piston member 40 forces the cam-surface termination portion 102 against roller member 106 to effect a counter clockwise opening torque on the valve member 20. This opening torque is sufficient to overcome the frictional engagement of sealing member 114 with the wall 14, and to pivot the valve member 20 through an initial opening angular increment toward the position depicted in FIG. 4.

This initial opening movement of the butterfly valve member 20 is sufficient to "crack open" the valve 10 and allow the beginning of fluid flow in flow path 16.

Subsequent to this initial opening movement of valve member 20, further inflow of pressurized fluid to chamber 54 causes the piston member 40 to further extend contacting abutment ring 100 with boss 98. Additional pressurization of chamber 54 causes the piston member 40 to move flap member 82 outwardly in opposition to the springs 90, 92. During this phase of valve operation, the valve member 20 is subject not only to static fluid pressure forces, but also to dynamic fluid flow forces. Extension of the flap member 82 at its edge 84 outwardly beyond the peripheral surface 86 of the valve member 20 has the effect of enlarging the trailing wing 20'' thereof, while the leading wing 20' remains of constant area. In other words, the silhouette of the valve member 20 is enlarged at the trailing wing 20'' thereof. Thus, the valve member 20 may be considered to act somewhat like a weather vane turning toward or away from the oncoming fluid flow in response to the fluid dynamic forces effective thereon.

As depicted in FIG. 4, the flap member 82 is almost completely extended outwardly of the trailing wing 20'' of valve member 20. Consequently, the freely-pivotal valve member 20 has taken an angular position in duct 12 allowing substantially full fluid flow therein. The applicants believe the angular position of valve member 20 correlates directly with the degree of extension of flap 82, and is relatively stable. That is, even though the valve member 20 is freely pivotal via trunnions 26, 28 in sockets 22, 24, there is little oscillation in the angular position of the valve member, and such fluxuation of flow in duct 12 as would result of such oscillation is not experienced.

In order to progressively close the valve member 20 from its position of FIG. 4 toward its position of FIG. 1, the pressure fluid is progressively relieved from chamber 54 via passage 58. Consequently, the flap member 82 is retracted progressively by springs 90, 92, and the valve member pivots toward its closed position in response to fluid dynamic flow forces. When the pressure fluid in chamber 54 is completely relieved, the valve member 20 will be close to, but not completely in, its position of FIG. 1. That is, the flap member 82 is completely retracted with abutment surface 88 engaging housing 32. The piston member 40 is completely retracted by spring 76, and spring 74 partially extends piston member 38 so that end 108 engages roller member 112. However, the spring 74 is the weakest of all the springs in the valve 10, and cannot extend piston member 38 because of the frictional engagement of sealing member 114 with wall 14.

Consequently, in order to completely close the valve member 20, pressurized fluid is provided to chambers 52 and 56 via the passage 60, chamber 68, and conduit 70, as depicted by arrow 72, viewing FIG. 2. This pressurized fluid expands chamber 52, and via end portion 108 in engagement with roller member 112, provides a clockwise closing torque to valve member 20. This closing torque is sufficient to overcome the frictional resistance provided by sealing member 114, and to move the valve member 20 to its fully closed position of FIG. 1. This fluid pressure supply to chamber 52 need not be maintained. A relatively short period of supply of pressure fluid to chamber 52 will sealingly close the valve member 20, after which it is stable in its closed position depicted in FIG.1.

## Claims

1. A butterfly valve (10) comprising a duct (12) defining a flow path (16) therein, a plate-like butterfly valve member (20) freely pivotal in said flow path about a pivot axis (26) between a first position transverse to and closing said flow path and a second position generally parallel to said flow path to open and allow flow of fluid therein, said butterfly valve member including a pair of wing portions (20', 20''), one (20'') of said pair of wing portions being a downstream wing with respect to pivotal movement of said butterfly valve member and flow in said flow path, and the other being a upstream wing with respect to said pivotal movement and flow, said wings having substantially equal effective areas on opposite sides of said pivot axis;
characterized in that said valve further comprises a flap member (82) carried with said valve member (20) and secured thereto so as to be selectively extensible from said downstream wing in a direction substantially parallel to said valve member, whereby extension of said flap member effectively increases the effective area of said downstream wing.

2. The butterfly valve of Claim 1 further comprising a fluid-driven actuator (30) secured to said valve member (20) so as to be carried with the valve member when the latter between said first and second positions, said actuator being connected to said flap member (82) so as to be operable to selectively extend the latter from said downstream wing (20'').

3. The butterfly valve of Claim 1 wherein said flap member (82) is slidably carried by said downstream wing (20'').

4. The butterfly valve of Claim 3 wherein said flap member (82) is planar and is slidably movable along a movement path parallel with said plate-like butterfly valve member (20).

5. The butterfly valve of Claim 4 wherein said planar flap member (82) includes an outer edge (84), said flap member (82) being slidably movable between a first position in juxtaposition with said butterfly valve member (20) wherein said outer edge (84) is disposed inwardly of a respective outer edge (86) of said butterfly valve member (20), and said planar flap member (84) sliding generally in the plane thereof to a second position wherein said outer edge (84) thereof is disposed outwardly of said outer edge (86)of said butterfly valve member (20), whereby the protruding area of said flap member between the outer edge (84) thereof and the outer edge (86) of said butterfly valve member (20) adds to the effective area of said downstream wing (20''); and further comprising an actuator (30) carried by said butterfly valve member (20) for selectively moving said flap member (82) between said first and said second positions thereof.

6. The butterfly valve of Claim 1 wherein said duct (12) is formed to provide two opposite recesses (104,110), each extending in a radially outward direction from said flow path; and further comprising two rollers (105,112) secured to said duct and rotatably disposed in respective ones of said recesses, and two rods (46,48) secured to said valve member (20) so as to be carried therewith and operable to engage said rollers when said valve member is at said first position, said rods also being cooperable with said rollers to forcefully pivot said valve member from an open position through an angular increment to said first position.

7. The butterfly valve of Claim 6 further comprising a fluid-driven actuator (30) including said rods (45,48); said actuator being connected to and carried with said valve member (20) so as to be operable to selectively move said rods in order to effect opening and closing pivotal movement of said butterfly valve member, and to selectively extend said flap member (82) from a peripherally outer edge (86) of said valve member in order to effectively increase the area of said downstream wing (20'').

8. A butterfly valve (10) comprising:
a duct member (12) having an elongate circumferential wall (14) bounding an axially extending fluid flow path (16) therein; a plate-like butterfly valve member (20) disposed in said flow path (16) and freely pivotally movable about a transverse pivot axis (28) between a first position wherein said valve member (20) is transverse to the elongate axis of said duct (12) and sealingly cooperates with said wall (14) to close said fluid flow path (16), and a second position wherein said valve member (20) is generally parallel with said duct to callow fluid flow in said flow path (16); said butterfly valve member (20) including a pair of wing portions (20', 20'') of substantially equal area disposed on opposite sides of said pivot axis (28), one of said pair of wing portions (20'') being a downstream wing with respect to pivotal movement of said valve member (20) from said first to said second position and fluid flow in said flow path;
characterized in that said valve further comprises a flap member (82) substantially parallel to and carried by said valve member, said flap member being secured to said valve member so as to be translationally movable relative thereto in a direction substantially parallel thereto, whereby said flap member is operable to selectively enlarge the silhouette of said valve member at said downstream wing (20'') thereof.

9. The butterfly valve of Claim 8 further comprising a fluid-driven actuator (30) carried upon said butterfly valve member (20) for moving said flap member (82) to enlarge said silhouette.

## Patentansprüche

1. Klappenventil (10) mit einem einen Strömungsweg (16) darin begrenzenden Kanal (12), ein plattenartiges Klappenventilglied (20), das in dem Strömungsweg um eine Schwenkachse (26) zwischen einer ersten Stellung frei schwenkbar ist, die quer zum Strömungsweg liegt und diesen schließt, und einer zweiten Stellung, die generell parallel zum Strömungsweg liegt, um ihn zu öffnen und die Strömung eines Fluides darin zu gestatten, welches Klappenventilglied ein Paar von Flügelteilen (20', 20'') aufweist, wovon einer (20'') aus dem Paar von Flügelteilen ein, bezüglich der Schwenkbewegung des Klappenventilgliedes und des Stromes in dem Strömungsweg, stromabwärts gelegener Flügel ist und der andere ein, bezüglich dieser Schwenkbewegung und des Stromes stromaufwärts gelegener Flügel ist, wobei die Flügel im wesentlichen gleiche wirksame Flächen an einander gegenüberliegenden Seiten der Schwenkachse aufweisen;
dadurch gekennzeichnet, daß das Ventil ferner ein vom Ventilglied (20) getragenes und an diesem derart befestigtes Klappenelement (82) aufweist, daß es wahlweise von dem stromabwärts gelegenen Flügel in einer im wesentlichen zum Ventilglied parallelen Richtung vorschiebbar ist, wobei das Vorschieben des Klappenelementes die wirksame Fläche des stromabwärts gelegenen Flügels in wirksamer Weise vergrößert.

2. Klappenventil nach Anspruch 1, welches ferner eine fluidgetriebene, am Ventilglied (20) derart befestigte Betätigungseinrichtung (30) aufweist, daß sie mit dem Ventilglied mitgetragen wird, wenn sich das letztere zwischen der ersten und der zweiten Lage bewegt, welche Betätigungseinrichtung mit dem Klappenelement (82) in solcher Weise verbunden ist, daß das letztere im Sinne eines wahlweisen Vorschiebens vom stromabwärts gelegenen Flügel (20'') betreibbar ist.

3. Klappenventil nach Anspruch 1, bei dem das Klappenelement (82) vom stromabwärts gelegenen Flügel (20'') gleitbar getragen ist.

4. Klappenventil nach Anspruch 3, bei dem das Klappenelement (82) flach und entlang eines Bewegungspfades gleitbar beweglich ist, der parallel zum plattenartigen Klappenventilglied (20) verläuft.

5. Klappenventil nach Anspruch 4, bei dem das flache Klappenelement (82) eine Außenkante (84) aufweist und das Klappenelement (82) zwischen einer ersten Stellung nebeneinander mit dem Klappenventilglied (20) gleitend beweglich ist, in der die Außenkante (84) bezüglich einer jeweiligen Außenkante (86) des Klappenventilgliedes (20) einwärts gelegen ist, und das flache Klappenelement (84) im wesentlichen in seiner Ebene in eine zweite Stellung gleitet, in der seine Außenkante (84) außerhalb der Außenkante (86) des Klappenventilgliedes (20) gelegen ist, wobei der vorragende Flächenbereich des Klappenelementes zwischen seiner Außenkante (84) und der Außenkante (86) des Klappenventilgliedes (20) sich zur wirksamen Fläche des stromabwärts gelegenen Flügels (20'') hinzufügt; und wobei ferner eine vom Klappenventilglied (20) getragene Betätigungseinrichtung (30) zum wahlweisen Bewegen des Klappenelementes (82) zwischen seiner ersten und zweiten Stellung vorgesehen ist.

6. Klappenventil nach Anspruch 1, bei dem der Kanal (12) zur Schaffung zweier einander gegenüberliegender Ausnehmungen (104, 110) ausgebildet ist, von denen sich eine jede in einer radial auswärts vom Strömungspfad führenden Richtung erstreckt; und das ferner zwei am Kanal befestigte und in der jeweiligen Ausnehmung drehbar angeordnete Rollen (105, 112) sowie zwei am Ventilglied (20) derart befestigte Stangen (46, 48) vorgesehen sind, daß sie mit demselben mitgetragen werden und zur Anlage an den Rollen betätigbar sind, wenn sich das Ventilglied in der ersten Lage befindet, welche Stangen auch mit den Rollen in einer Weise zusammenwirken, daß das Ventilglied aus einer Offenlage über einen Winkelanteil kraftvoll in seine erste Lage verschwenkt wird.

7. Klappenventil nach Anspruch 6, welches ferner eine fluidgetriebene, die Stangen (45, 48) umfassende Betätigungseinrichtung (30) aufweist; welche Betätigungseinrichtung mit dem Ventilglied (20) verbunden ist und mit diesem mitgetragen wird, so daß sie derart betreibbar ist, daß sie die Stangen wahlweise bewegt, um eine Schwenkbewegung zum Öffnen und zum Schließen des Klappenventilgliedes zu bewirken und um das Klappenelement (82) wahlweise von einer äußeren Umfangskante (86) des Ventilgliedes zur wirksamen Vergrößerung des Flächenbereiches des stromabwärts gelegenen Flügels (20'') vorzuschieben.

8. Klappenventil (10), welches aufweist:
ein Kanalelement (12) mit einer länglichen Umfangswandung (14), die einen sich axial erstreckenden Strömungsweg (16) darin begrenzt; ein in dem Fluidströmungsweg (16) angeordnetes plattenartiges Klappenventilglied (20), das um eine quer verlaufende Schwenkachse (28) zwischen einer ersten Stellung frei schwenkbar ist, in der das Ventilglied (20) quer zur Längsachse des Kanales (12) liegt und mit der Wandung (14) unter Abdichtung zusammenwirkt, um den Strömungsweg (16) abzuschließen, und einer zweiten Stellung, in der das Ventilglied (20) im wesentlichen parallel zu dem Kanal liegt, um eine Fluidströmung in dem Strömungsweg (16) zu gestatten; welches Klappenventilglied (20) ein Paar von Flügelteilen (20', 20'') von im wesentlichen gleicher Fläche aufweist, die an einander gegenüberliegenden Seiten der Schwenkachse (28) angeordnet sind, wovon einer (20'') aus dem Paar von Flügelteilen ein, bezüglich der Schwenkbewegung des Ventilgliedes (20) von der ersten zur zweiten Lage und bezüglich des Fluidstromes in dem Strömungsweg, stromabwärts gelegener Flügel ist;
dadurch gekennzeichnet, daß das Ventil ferner ein zum Ventilglied paralleles und von diesem getragenes Klappenelement (82) aufweist, welches Klappenelement am Ventilglied derart befestigt ist, daß es relativ zu diesem in einer im wesentlichen dazu parallelen Richtung verschiebbar beweglich ist, wobei das Klappenelement derart betreibbar ist, daß es wahlweise die Silhouette des Ventilgliedes am stromabwärts gelegenen Flügel (20'') desselben vergrößert.

9. Klappenventil nach Anspruch 8, welches ferner eine fluidgetriebene, am Klappenventilglied (20) getragene Betätigungseinrichtung (30) zum Bewegen des Klappenelementes (82) zur Vergrößerung der Silhouette aufweist.

## Revendications

1. Robinet papillon (10) comprenant une canalisation (12) définissant un trajet d'écoulement (16) dans celle-ci, un élément de robinet papillon de type plaque (20) pouvant pivoter librement dans ledit trajet d'écoulement sur un axe pivotant (26) entre une première position transversale et fermant ledit trajet d'écoulement à une seconde position généralement parallèle au trajet d'écoulement pour ouvrir et pour permettre l'écoulement du fluide dans celle-ci, l'élément de robinet papillon comportant une paire de parties d'aile (20', 20'') de surfaces effectives pratiquement égales sur les côtés opposés de l'axe pivotant, une partie d'aile (20'') de la paire de parties d'aile étant une aile en avant par rapport au mouvement pivotant de l'élément de robinet papillon et de l'écoulement dans le trajet d'écoulement, et l'autre étant une aile en amont par rapport au mouvement pivotant et à l'écoulement, les ailes ayant des surfaces effectives pratiquement égales sur les côtés opposés de l'axe pivotant ;
caractérisé en ce que le robinet comprend de plus un élément de volet (82) entraîné avec l'élément de robinet (20) et fixé à celui-ci de façon à être sélectivement développable à partir de l'aile en aval dans une direction pratiquement parallèle à l'élément de robinet, d'où il résulte que le développement de l'élément de volet augmente efficacement la surface effective de l'aile en aval.

2. Robinet papillon selon la revendication 1, comprenant de plus un dispositif d'actionnement commandé par fluide (30) fixé à l'élément de robinet (20) de façon à être entraîné avec l'élément de robinet lorsque ce dernier se déplace entre les première et seconde positions, le dispositif d'actionnement étant raccordé à l'élément de volet (82) de façon à être mis en oeuvre pour développer sélectivement ce dernier à partir de l'aile en aval (20'').

3. Robinet papillon selon la revendication 1, dans lequel l'élément de volet (82) est supporté de manière coulissante par l'aile en aval (20').

4. Robinet papillon selon la revendication 3, dans lequel l'élément de volet (82) est plan et déplaçable de manière coulissante suivant un trajet de déplacement parallèle à l'élément de robinet papillon de type plaque (20).

5. Robinet papillon selon la revendication 4, dans lequel l'élément de volet plan (82) comporte un rebord extérieur (84), l'élément de volet (82) étant déplaçable de manière coulissante entre une première position en juxtaposition avec l'élément de robinet papillon (20) dans lequel le rebord extérieur (84) est disposé vers l'intérieur d'un rebord extérieur respectif (86) de l'élément de robinet papillon (20), et l'élément de volet plan (84) coulissant généralement dans le plan de celui-ci vers une seconde position à laquelle le rebord extérieur de celui-ci (84) est disposé vers l'extérieur du rebord extérieur (86) de l'élément de robinet papillon (20), d'où il résulte que la surface dépassante de l'élément de volet entre son rebord extérieur (84) et le rebord extérieur (86) de l'élément de robinet papillon (20) ajoute une surface effective à l'aile en aval (20'') ; et de plus comprend un dispositif d'actionnement (30) supporté par l'élément de robinet papillon (20) pour sélectivement déplacer l'élément de volet (82) entre ses première et seconde positions.

6. Robinet papillon selon la revendication 1, dans lequel la canalisation (12) est formé pour procurer deux évidements opposés (104, 110) s'étendant chacun dans une direction radialement vers l'extérieur à partir du trajet d'écoulement ; et comprenant de plus deux rouleaux (105, 112) fixés à la canalisation et disposés de manière tournante dans les évidements respectifs parmi les évidements, et deux tiges (46, 48) fixées audit élément de robinet (20) de façon à être entraînées avec celui-ci et mises en oeuvre pour engager les rouleaux lorsque ledit élément de robinet est à la première position, les tiges pouvant également coopérer avec les rouleaux pour faire pivoter de manière totalement forcée l'élément de robinet à partir d'une position ouverte à la première position par l'intermédiaire d'une incrémentation angulaire.

7. Robinet papillon selon la revendication 6, comprenant de plus un dispositif d'actionnement commandé par fluide (30) comportant les tiges (45, 48), le dispositif d'actionnement étant raccordé à et entraîné avec l'élément de robinet (20) de façon à pouvoir être mis en oeuvre pour sélectivement déplacer les tiges afin d'effectuer le mouvement pivotant d'ouverture et de fermeture de l'élément de robinet papillon, et pour sélectivement développer l'élément de volet (82) à partir d'un rebord périphériquement extérieur (86) de l'élément de robinet afin d'augmenter efficacement la surface de l'aile en aval (20'').

8. Robinet papillon (10) comprenant :
un élément de canalisation (12) ayant une paroi allongée circonférentielle (14) délimitant un trajet d'écoulement fluidique se prolongeant axialement (16) dans celle-ci ; un élément de robinet papillon de type plaque (20) disposé dans le trajet d'écoulement (16) et déplaçable librement de manière pivotante sur un axe pivotant transversal (28) entre une première position dans laquelle l'élément de robinet (20) est transversal à l'axe allongé de la canalisation (12) et coopère de manière hermétique avec la paroi (14) pour fermer le trajet d'écoulement fluidique (16), et une seconde position à laquelle l'élément de robinet (20) est généralement parallèle à ladite canalisation pour permettre l'écoulement du fluide suivant le trajet d'écoulement (16), l'élément de robinet papillon (20) comportant une paire de parties d'aile (20', 20'') de surfaces pratiquement égales disposées sur les côtés opposés de l'axe pivotant (28), une partie d'aile de la paire des parties d'aile (20'') étant une aile en aval par rapport au mouvement pivotant de l'élément de robinet (20) de la première position à la seconde position et de l'écoulement du fluide suivant le trajet d'écoulement ;
caractérisé en ce que le robinet comprend de plus un élément de volet (82) pratiquement parallèle à et entraîné par l'élément de robinet, l'élément de volet étant fixé à l'élément de robinet de façon à être déplaçable de manière translationnelle par rapport à celui-ci dans une direction pratiquement parallèle à celui-ci, d'où il résulte que l'élément de volet est mis en oeuvre pour sélectivement agrandir la silhouette de l'élément de robinet à son aile en aval (20'').

9. Robinet papillon selon la revendication 8, comprenant de plus un dispositif d'actionnement commandé par fluide (30) supporté sur l'élément de robinet papillon (20) pour déplacer l'élément de volet (82) pour agrandir la silhouette.
